# EUROPEAN PATENT APPLICATION

(11) **EP 2 463 818 A1**
(43) Date of publication of application: **13.06.2012**
(21) Application number: 10193958.5
(22) Date of filing: 07.12.2010
(51) Int. Cl.: G06Q 30/00

(54) **A method for creating computer generated shopping list**

(71) Applicant: Digital Foodie Oy, 00510 Helsinki (FI)
(72) Inventor: Mattila, Samuli, 11710, Riihimäki (FI)
(74) Representative: Papula Oy

(57) **Abstract**

A method for generating grocery shopping lists in a network of users. According to the method the grocery shopping list can be composed even without extensive history data that is. Furthermore, the present invention is arranged to compose grocery shopping lists for groups, such as families. The lists are generated based on recommendations derived from the network of users.

## Description

### FIELD OF THE INVENTION

The invention relates to computer generated grocery-shopping lists. The invention relates particularly to applying data mining and collaborative filtering in a social network to automatically generate shopping list to a selected user or family.

### BACKGROUND OF THE INVENTION

Shopping list applications exist for various devices to help us with our daily grocery shopping as electronic replacement for pen and paper lists. The user of such applications inputs reminders for him to purchase desired items from a local store. The shopping list can then be sent to the person doing the physical shopping or shared with other family members. Now a days, the item detail granularity varies, generally being crude, but as technology progresses, more detailed information such as prize information becomes available. Since people like to do things with minimum effort, we expect computers to do more things on our behalf, the ultimate goal being that shopping list is automatically generated by the computer and the groceries are delivered from store to your refrigerator.

Implementations, or rather concepts of intelligent shopping lists are known to exist varying from cloud platforms to mobile devices, intelligent refrigerators and computer enhanced shopping carts. Thus uses of such shopping lists are many, typically the purpose being to make our daily grocery shopping a bit easier and save us both time and money.

Although most attempts to make a computer generated meal plans or shopping lists have failed to achieve popularity, there are examples of such systems disclosed for example in U.S. Pat. 7249708, U.S. Pat. No. 6236974 and U.S. Pat. No. 6595417. U.S. Pat 7249708, like many similar patents, presumes existence of traceable purchase history trough customer loyalty program bonus card; alas a trivial method tied to a specific customer loyalty system. U.S. Pat. No. 6236974 discloses a method wherein a computer defined user taste or preference vector is compared against known recipe or product taste vector, which is based on pre-determined classification, to find suitable matches, alas a more manual method of approach. U.S. Pat. No. 6595417 describes a shopping list that utilizes purchase history in a portable terminal with barcode reader. The patent covers usage of notepad/checklist applications in any mobile terminals with web-browser and a camera, alas no actual method could be found.

However, the found history derived methods have severe technical drawbacks. Many are just method-wise outdated. More importantly, these methods fail to take into account that there is, in general, too little source information to make meaningful recommendations based on user profile or purchase history. The presumption the availability of a comprehensive initial purchase history is false. Extensive seed information, based on retail chains' accounting and bonus card systems, limits service scope to a particular retail chain. Besides, the information cannot be disclosed to third parties due to privacy legislation reasons. There exists very little loyalty in use of Internet services and therefore modern shopping list service should not be bound to any single loyalty program. On the other hand, to teach a computer to recognize one's family preferences one person, recipe and item at a time is highly inefficient and time-consuming. Hence such service model is unlikely to thrive in this Internet age. Third issue comes with failure to take into account existence of social semantic and collaborative media aspects. A fourth issue is that the methods according to the prior art do not work if the shopping history is not available or at least it must be generated by doing a lot of shopping. This is time demanding and has also other drawbacks mentioned above. A further drawback of the prior art systems is that they rely either goods that don't go bad and are usually personal. When buying food the buyer must take into account that the food that has been before may have gone bad and in the family there might be different needs to be fulfilled.

### PURPOSE OF THE INVENTION

The purpose of the invention is to disclose a method to induce automatically generated shopping lists trough social semantic model enhanced with methods used in artificial intelligence.

### SUMMARY OF THE INVENTION

For understanding the invention better, it should be understood that many cloud based social network services use a friend model, or a neighborhood model to be specific, in order to create user a social context. A social context enables use of advanced mathematical methods, which can be applied to create better recommendations and automatic shopping lists with even small amounts of seed- or user purchase history information.

The invention discloses a method to create computer generated shopping lists. According to the invention the system is based on social semantic recommendations, which are computed in a cloud based internet service. The shopping list is delivered to people as a service satellite or mash-up service to places where users generally spend their time (e.g. Facebook) or to Internet devices that people carry with them (e.g. iPhone). The service needs to be offered to users in their habitat and on their terms in order to gain acceptance.

According to present invention, the shopping list is generated through social semantic recommendations. Instead of concentrating effort on user's previous purchases or pre-determined taste profile, we instead find matching like-minded users, hereinafter referred as neighbors. For each user, a finite set of neighbors are defined and subsequently added to his or her family's neighborhood graph. Semantic algorithms and cognitive learning methods are then applied in sequence to compute shopping list recommendations. The information that is used to derive shopping list is extrapolated from family-neighbor associations. Furthermore, the shopping list itinerary is augmented with information derived from item neighborhood network. Item-to-item associations are used to define how products are related to each other, in a similar manner as the family neighborhood network is formed from like-minded people.

In an embodiment a method according the present invention for automatic generation of grocery shopping lists that fit to the products of user profiles in a network of users, such as a social network, arranged in to a data communication system, wherein each individual belongs to a group sharing said grocery shopping list is disclosed. In the embodiment user behavior patterns for each individual are determined. Then neighbors for each individual in the social network based on said user behavior patterns are determined. Then at least one recommendation for said group from at least neighbor of at least one individual in said group is derived and purchasing probability for each recommendation is determined. Then the user chooses the shop where the shopping is done. After that a grocery shopping list based on said recommendations, probabilities and predetermined group preferences is composed from the inventory of the chosen shop. Further embodiments are disclosed in the dependent claims.

The benefit of the invention is that an automatic shopping list can be generated for a selected family with minimal amount of family purchase history information or background knowledge, basing the computation on habits of like-minded individuals. This greatly reduces the amount of seed information needed to create accurate and true recommendations for a particular user. Furthermore, the model allows family members to act as individuals within family group, each having distinct and desired impact on items selected for family shopping list. In addition, the system adapts to new shopping behavior much more aggressively than traditional recommendation systems, hence making it a learning artificial intelligence in true sense of the word. Moreover, applying item neighborhood model greatly benefits from the usage of detailed product-level inventory by allowing the system to create shopping lists with granularity of product name, brand and even a prize.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:

FIG. 1 is an illustration of an example embodiment according to the invention, depicting the various components of the system.

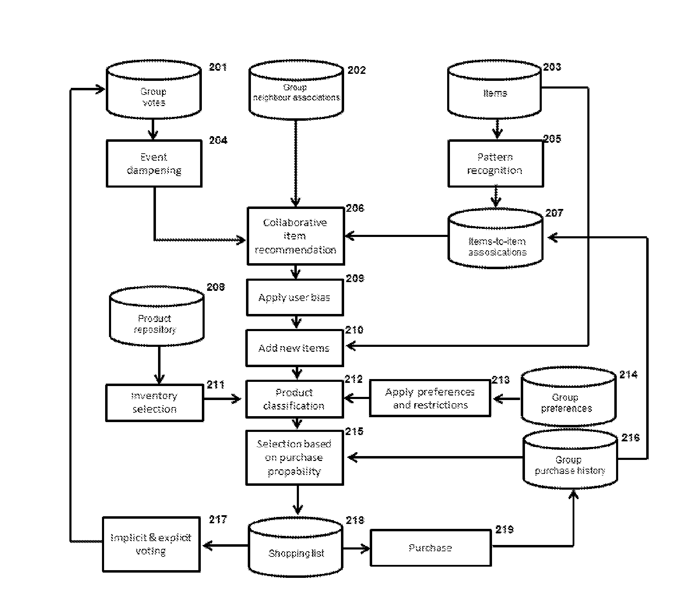

FIG. 2 is a flow chart of a method according to the present invention.

### DETAILED DESCRIPTION OF THE INVENTION

Reference will now be made in detail to the embodiments of the present invention, examples of which are illustrated in the accompanying drawings.

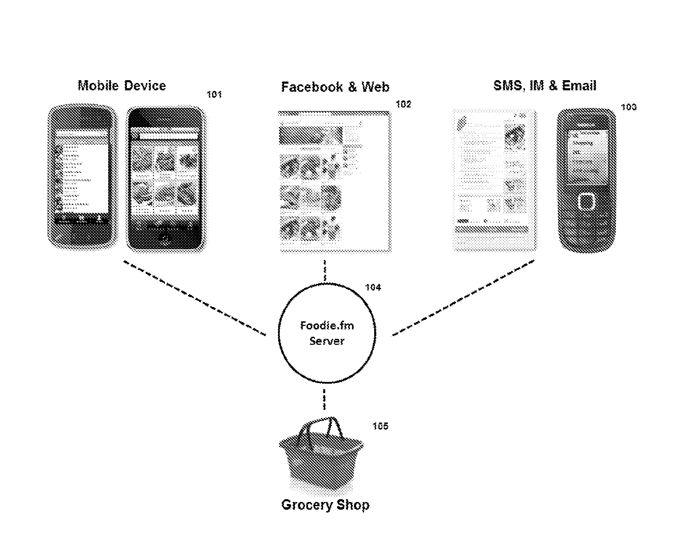

In FIG. 1 an illustration of a recommendation system according to the invention is provided. The embodiment of FIG. 1 The shopping list recommendation client architecture is based on service satellites 101,102, which communicate with hereby shopping list recommendation server 104 trough collaborative editing protocol over the Internet. The protocol allows simultaneous editing of shared shopping list content from multiple clients and contains automatic conflict resolution. The shopping list service satellites are made available as "apps" to existing social media services such as Facebook, or mobile devices such as iPhone, Android and Nokia. Furthermore widgets and similar web interfaces are provided to other web compliant environments. The shopping recommendations can also be delivered trough messaging 103, such as SMS, email or instant messaging. Once user has accepted the shopping list recommendations with his or her modifications, the service can submit this to grocery store 105 of users choice electronically as order.

User behavior patterns are determined based on voting and event dampening. Individual users or group members may express their opinions inside community service or social media by voting 201. Shopping list vote is expressed through ternary logic: positive, negative and high-impedance votes. Positive votes indicate favorable reaction and are expressed e.g. by voting thumb up, adding item to shopping list or purchasing the item 217. Negative votes indicate disliking and are expressed e.g. by voting thumb down or discarding items 217. Ignoring or passing recommendations counts as generally as high-impedance vote 217. The votes jointly form a voting and behavior pattern, which is used to determine user neighborhood and preferences as described in following chapters. Furthermore, all voting events posted by users have dampening times 204. Recently posted votes have higher impact on determining neighborhood network and purchase frequency, and the vote influence decays exponentially as function of time until it reaches a cut off point in observer horizon 204. As a result the events of the past have reduced effect on future recommendation(s) reflecting current state better and recommendation automation can use this information to extrapolate ratio of present item purchase frequency and quantity.

The invention declares that a computer generated shopping list is composed out of information derived from family- or group neighbor associations 202. Shopping list by itself is presumed to be collaborative media, which group members within a social media- or community service may edit and update. Each member of a group acts as individual within this community by voting as they deem fit. The votes and actions performed by individuals within the community form series of feature arrays reflecting past actions. Neighborhood association is calculated for each user by comparing users' feature vectors. The similarities are determined from individual users' feature vectors by applying Pearson's correlation or other such similarity measure. The result is large mesh of users that defines similarity relation between different users by closeness or weight of the connecting association. Neighbor associations for family or groups entities are then composed as union of member similarity mesh wherein result vertex weights are a function of group member neighbor distances and group size.

In traditional logic, the grocery item recommendations would be consequent to user's purchase history. In traditional logic, non-grocery item recommendation would be consequent to preferences of single user; should one family member purchase a recommended book, this would not imply that other family members need to read it. In grocires, should one member of family purchase food, this would in fact imply that other family members need to be able to eat it too. The invention defines that grocery item recommendations are formed on basis of purchase histories of associated neighbors and social context. Furthermore, the shopping list is considered collaborative media and therefore item recommendations are derived from family's or group's joint associations as described in chapter [0017] in relationship to vote dampening times as defined in chapter [0016]. The method allows system to compute good and accurate collaborative item recommendations 206 while having limited purchase history available on an individual user.

The invention also declares that a computer generated shopping list is complemented with recommendations derived from item-to-item associations 207. These associations are calculated by comparing purchase times within a shopping list 205. Strong associations become apparent for items which appear frequently within the context of a predefined timeframe. Furthermore, applying Pearson's correlation prevents frequently purchased items or recipe ingredients, such as milk or bread, from cluttering the results. The method reduces the amount of false positives in associations and removes excess noise from item neighborhood. The logic enables system to augment recommendations 206 resulting from neighbor associations described in chapter [0018] with associated items in relationship to vote dampening times as defined in chapter [0016]. For example, a user that purchases sausage may be offered mustard and potato salad. Moreover, item-to-item associations are applied in statistical pattern-recognition as described in chapter [0023] to determine probabilities of two items being purchased at the same time.

A user bias 209 is applied on collaborative recommendations. Shopping list recommendations are composed out of joint neighborhood of all family or group members who share a shopping list. All individuals belonging to a group can edit or influence the outcome of selected items collaboratively in order to express their desired purchases. Normally unbiased recommendation between all members would produce a statistically better overall recommendation result. However, this result may seem worse to the person doing editing, since he is aware of his own liking and disliking, but may be unaware of other group members' preferences. Therefore a user bias is applied to collaborative recommendation to favor the group member currently composing the shopping list. The user bias is achieved by increasing weight of his personal neighborhood ties or shortening distances to his neighbors in comparison to other group members. Bias applied is relative to group member count. The end result creates recommendation bias that allows extracting more positive purchase decisions from the empowered group member.

A static user neighborhood may create dilemma of a closed ecosystem. Should a fixed group of neighbors recommend similar set of products to each other, the variance in item becomes marginal. In practice this would prevent people from discovering new and noteworthy things trough recommendations. To avoid this, recommendations are augmented with small subset of new items 210, which are composed out of random item neighbors, item(s) selected based on freshness, derived from acceleration in item popularity. The method introduces a steady flow of new items that come outside the normal neighborhood, hence disrupting a pattern that would lead to a closed ecosystem and allows people to discover new things better.

All items have a pre-determined average purchase frequency and an average consumption rate based on actions of active users within the community service. These values are used as initial guesses for user specific purchase frequencies and consumption rates until sufficient user specific information becomes available. Voting patterns are used to compute convergence on these values towards user specific optimums. The purchase frequency is used to determine item cool-down period, to prevent recommending the same items too frequently even though this would be justified in light of total purchase counts. The recommendation penalty related to the cool down period is reduced in correlation to estimated consumption rate.

Pattern-recognition is used to predict user behavior and learn from experience. A sensor agent is responsible for gathering numeric or symbolic observation information on users' active operations related to shopping lists, referred as observation vector. Using this data statistical pattern matching, classification and Hidden Markov Model (HMM) are used to calculate a purchase probability 215 for each item in user's recommendation array. This purchase probability is based both on time series observation vector gathered from individual users and their family members. Principal Components Analysis (PCA) is used to reduce the dimensionality of observations and to disregard data unrelated to grocery item recommendations. This method forms a basis of artificial intelligence, a system capable of cognitive- and instance-based learning with respect to doing grocery shopping. This method rapidly computes the convergence on general grocery preferences derived from user's neighborhood towards individual user or family preferences.

Group preferences 214 are appended to Al decision trees 212. Users and groups may have constraints that can influence radically the probability of extracting purchase decision from targeted individual. Typical restrictions include, but are not limited to, budget and diet restrictions, ecological purchase preferences, brand loyalty, medical conditions and food allergies. The conditions above transform the decision tree to only contain valid nodes related to user 213. This enables Al to determine what specific products it should, or rather is allowed to, select when recommendations are converted into items that are available in store inventory 211. In order to achieve this, the Al scores available products in the shop inventory against products detail and ingredient information. Product ingredient information is gathered from nation or continent wide central product repository 208, such as e.g. GS1 and SA2 WorldSync. Therefore, for example, for a person with coeliac food diet, recommendation "flour" is hereby converted into set of gluten free flour products, from which actual shopping list products are to be selected as described in chapter [0025].

Item recommendations are mapped into products available in selected store inventory dynamically 211. Al classifier 212 traverses through decision tree observations such as constraints, quantities, popularity attributes and brand loyalty attributes, when associating item recommendations with products available in store. Al scores matching products and results are sorted in order of score. End user is presented top scoring products as preferred selection, while at same time making browsing of corresponding alternative products easy. As end result the consumer is provided with a product specific electronic shopping list 218 with capability of adapting to store product inventory on demand, along with prizing. The hereby shopping list can be then modified by user and submitted as purchase order 219 for grocery shop 104 electronic store front or logistics system.

The above recommendation- and item selection logic is also applied to special offer- and advertisement inventory seletion 211. As individual shops have different inventories of products, the retail chains have an inventory of special offers for shops in selected geographic region. The invention methods are therefore applied to automatic selection of special offers as recommendations. This enables system to display user specific targeted advertisements to a person that are likely to purchase those products and automatically filter out offers that are not of interest to the user. Furthermore, the recommendation cool down period, as described in chapter [0022], prevents displaying one offer to single person recurrently, should he have already purchased or rejected it once.

In an embodiment the method described above is implemented as a computer software. The computer software is be embodied in a computer readable medium. In a further embodiment the present invention is implemented by executing the computer software in a server being capable of communicating with various kinds of user terminals.

It is obvious to a person skilled in the art that with the advancement of technology the basic idea of the invention may be implemented in various ways. The invention and its embodiments are thus not limited to the examples described above; instead they may vary within the scope of the claims.

## Claims

1. Method for automatic generation of grocery shopping lists that fit to the products of user profiles in a network of users arranged in to a data communication system, wherein each individual belongs to a group sharing said grocery shopping list;
***characterized* by** that the method comprises:
determining user behavior patterns (217, 201, 204) for each individual;
determining neighbors (202) for each individual in the network based on said user behavior patterns;
deriving at least one recommendation (206) for said group from at least neighbor of at least one individual in said group;
determining purchasing probability (215) for each recommendation;
selecting a grocery shop (208, 211); and
composing a grocery shopping list (218) from the inventory of the selected grocery shop based on said recommendations and probabilities.

2. A method according to claim 1, wherein the method further comprises augmenting the grocery shopping list with small subset of new items, which are composed out of item neighbors, at least one item selected based on freshness or derived from acceleration in item popularity.

3. A method according any of preceding claim 1 or 2, wherein using Hidden Markov Model to calculate each item recommendation a purchase probability.

4. A method according to any of claims 1 - 3, wherein determining user behavior patterns by using voting results and respective voting dampening time.

5. A method according to any of claims 1 - 4, wherein the method further comprises delivering said grocery shopping list to the user.

6. A method according to any of claims 1 - 5, wherein said composing is further based on predetermined group preferences.

7. A method according to claim 6, wherein the predetermined preferences includes at least one of the following: purchase history, search history, voting history on recommended items, average purchase frequency for each item, average consumption rate for each item, price preference and dietary restrictions.

8. A method according to any of claims 1 - 7, wherein said composing is further based on offers available at the selected shop.

9. A computer program, wherein the computer program is configured to execute the method according to any of preceding claim 1 - 8 when executed in a computing device.

10. A server (104), wherein the server is configured perform the method according to any of preceding claim 1 - 8.

11. A server according to claim 11, wherein the server is configured to perform said method by executing a computer program according to claim 10.
